# EUROPEAN PATENT APPLICATION

(11) **EP 4 791 071 A1**
(43) Date of publication of application: **12.08.2026**
(21) Application number: 26155907.4
(22) Date of filing: 03.02.2026
(51) Int. Cl.: H04W 24/10

(54) **APPARATUS, METHOD AND COMPUTER PROGRAM**

(30) Priority: 07.02.2025 GB 202501852
(71) Applicant: Nokia Technologies Oy, 02610 Espoo (FI)
(72) Inventor: BARACCA, Paolo, Munich (DE); CAPORAL DEL BARRIO, Samantha, Aalborg (DK); ENESCU, Mihai, Espoo (FI)
(74) Representative: Nokia EPO representatives

(57) **Abstract**

There is provided an apparatus comprising at least one processor, and at least one memory storing instructions which, when executed by the at least one processor, cause the apparatus at least to perform determining the occurrence of at least two events of a plurality of events, wherein the plurality of events are related to beam quality, determining, based on at least one first condition, an order in which a beam report comprising measurements related to one event of the at least two events and at least one further beam report related to an other event of the at least two events are sent to the network and providing the beam reports related to each of the at least two events to the network in different occasions on an uplink channel in the determined order.

## Description

### TECHNICAL FIELD

Various embodiments of this disclosure relate generally to methods, apparatus and computer programs, and in particular, but not exclusively, to user equipment initiated beam reports (UEIBM) configuration for multiple events.

### BACKGROUND

A communication system can be seen as a facility that enables communication sessions between two or more communication devices, or provides communication devices access to a network. A mobile or wireless communication network is one example of a communication network. A communication device may be provided with a service by an application server.

A mobile or wireless communication network may operate in accordance with standard(s), such as those provided by 3GPP (Third Generation Partnership Project) or ETSI (European Telecommunications Standards Institute). Examples of mobile or wireless communication network that operate in accordance with 3GPP standards are generally referred to as 4G (4th Generation) networks, 5G (5th Generation) network, 5G-Advanced networks and 6G networks.

### SUMMARY

Some embodiments of this disclosure will be described with respect to certain aspects. These aspects are not intended to indicate key or essential features of the various example embodiments of this disclosure, nor are they intended to be used to limit the scope of thereof. Other features, aspects, and elements will be readily apparent to a person skilled in the art in view of this disclosure. For example, it should be appreciated that further aspects may be provided by the combination of any two or more of the various aspects described herein.

In a first aspect there is provided a method comprising determining the occurrence of at least two events of a plurality of events, wherein the plurality of events are related to beam quality, performing measurements of beam quality configured for the at least two of the plurality of events and providing a beam report to a network, wherein the beam report comprises measurements configured for the at least two of the plurality events.

The beam report may comprise measurements of the quality of N beams with a highest quality.

The beam report may further comprise at least one of a measurement of the quality of a serving beam or a beam other than the serving beam with a predefined quality.

The method may be performed at a user equipment and the beam report may be a user equipment initiated beam report.

The method may comprise providing a further beam report to the network, wherein the further beam report comprises beam measurements related to a one of the at least two events.

The beam report and the further beam report may be transmitted in different occasions on an uplink channel.

The method may be performed at a user equipment and the further beam report may be a user equipment initiated beam report.

The beam quality may comprise quality of a reference beam received from the network.

The beam quality may comprise at least one of reference signal received power or signal to interference plus noise ratio of a reference signal of a respective beam.

The plurality of events may comprise at least one of the following: the quality of a beam other than a serving beam being higher than the quality of the serving beam by a threshold value, the quality of the serving beam being lower than a threshold or the quality of a beam other than the serving beam being higher by a threshold value than a beam associated with an activated transmission configuration indicator state with a predefined quality.

The method may comprise providing an indication to the network of the occurrence of the at least two of the plurality of events.

The method may comprise receiving a configuration of a format of the beam report from the network.

In a second aspect there is provided a method comprising determining the occurrence of at least two events of a plurality of events, wherein the plurality of events are related to beam quality, performing measurements of beam quality configured for the at least two of the plurality of events, obtaining a rule defining an order in which a beam report comprising measurements relating to one of the at least two events and at least one further beam report comprising measurements relating to an other of the at least two events should be sent, determining, based on the obtained rule, which of the beam report and at least one further beam report to provide to the network and providing the determined one of the beam report and the at least one further beam report to the network.

The method may comprise providing an other of the beam report and the at least one further beam report to the network, wherein the determined one of the beam report and the at least one further beam report and the other of the beam report and the at least one further beam report are transmitted in different occasions on a uplink channel.

The rule may be based on at least one of the following: an order in which the at least two events occur, an identifier of the event or a preconfigured rule.

The preconfigured rule may be received from the network.

The method may comprise providing an indication to the network of the occurrence of the at least two of the plurality of events.

The method may comprise providing an indication to the network of the occurrence of the at least two of the plurality of events using a periodic control channel associated with the each of the at least two events respectively.

The method may comprise determining the order in which the beam report and the at least one further beam report is sent based on an order in which the at least two events are indicated to the network.

Beam quality may comprise the quality of a reference beam received from the network.

Beam quality may comprise at least one of reference signal received power or signal to interference plus noise ratio of a reference signal of a respective beam.

The plurality of events may comprise at least one of the following: the quality of beam other than a serving beam being higher than the quality of the serving beam by a threshold value, the quality of the serving beam being lower than a threshold or the quality of a beam other than the serving beam being higher by a threshold value than a beam associated with an activated transmission configuration indicator state with a predefined quality.

The method may be performed at a user equipment and the beam report and the at least one further beam report may comprise a user equipment initiated beam report.

In a third aspect there is provided a method comprising determining the occurrence of at least two events of a plurality of events, wherein the plurality of events are related to beam quality, determining, based on at least one first condition, an order in which a beam report comprising measurements related to one event of the at least two events and at least one further beam report related to an other event of the at least two events are sent to the network and providing the beam reports related to each of the at least two events to the network in different occasions on an uplink channel in the determined order.

The at least one condition may comprise beam quality.

The at least one first condition may comprise a quality of a serving beam.

The at least one first condition may comprise a difference between a quality of a serving beam and a quality of a best new beam.

The quality may comprise at least one of reference signal received power or signal to interference plus noise ratio of a reference signal of a respective beam.

The plurality of events may comprise at least one of the following: the quality of beam other than a serving beam being higher than the quality of the serving beam by a threshold value, the quality of the serving beam being lower than a threshold or the quality of a beam other than the serving beam being higher by a threshold value than a beam associated with an activated transmission configuration indicator state with a predefined quality.

The method may be performed at a user equipment and the beam report and the at least one further report may comprise a user equipment initiated beam report.

In a fourth aspect there is provided an apparatus comprising means for performing the method according to the first, second or third aspect.

In a fifth aspect there is provided an apparatus comprising at least one processor, and at least one memory storing instructions which, when executed by the at least one processor, cause the apparatus at least to perform a method according to the first, second or third aspect. Examples provide an apparatus comprising at least one processor, and at least one memory storing instructions which, when executed by the at least one processor, cause the apparatus at least to perform: determining the occurrence of at least two events of a plurality of events, wherein the plurality of events are related to beam quality; determining, based on at least one first condition, an order in which a beam report comprising measurements related to one event of the at least two events and at least one further beam report related to an other event of the at least two events are sent to the network; and providing the beam reports related to each of the at least two events to the network in different occasions on an uplink channel in the determined order.

In a sixth aspect there is provided a non-transitory computer readable medium comprising instructions wherein the instructions when executed by at least one processor of an apparatus cause the apparatus to perform the method according to the first, second or third aspect.

In a seventh aspect there is provided a computer program comprising instructions which, when executed by an apparatus, cause the apparatus to perform at least the method according to the first, second or third aspect.

Some embodiments of the invention are defined in the dependent claims.

In the above, many different aspects have been described. As previously noted, it should be appreciated that further aspects may be provided by the combination of any two or more of the aspects described above (or otherwise in this disclosure).

Various other aspects are also described in the following detailed description and in the claims.

### BRIEF DESCRIPTION OF THE FIGURES

Some embodiments will be described, by way of non-limiting and illustrative example only, with reference to the figures, in which:
Fig. 1 shows an example of a communication network to which examples disclosed herein may be applied;
Fig. 2 shows a flowchart of a method according to an example;
Fig. 3 shows a block diagram of channel reporting occasions against time;
Fig. 4 shows a flowchart of a method according to an example;
Fig. 5 shows a block diagram of channel reporting occasions against time;
Fig. 6 shows a block diagram of channel reporting occasions against time;
Fig. 7 shows a flowchart of a method according to an example;

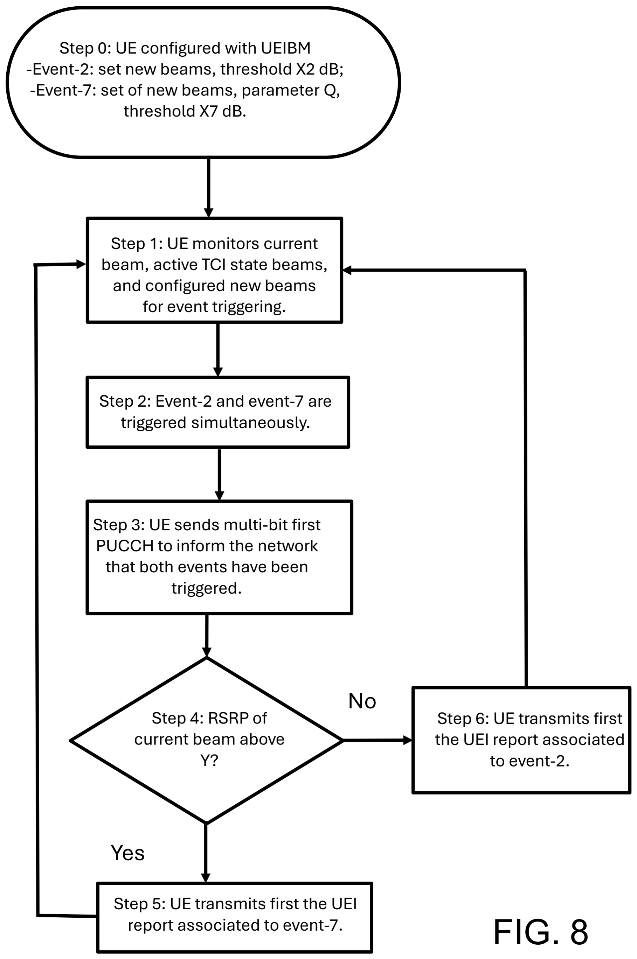

Fig. 8 shows a flowchart of a method according to an example;
Fig. 9 shows an example of an apparatus.

### DETAILED DESCRIPTION

The following embodiments are provided by way of non-limiting and illustrative example. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it intended such feature, structure, or characteristic may be applied in connection with other embodiments (whether or not explicitly described).

It shall be understood that although the terms "first," "second" and the like may be used herein to describe various elements, these elements should not be limited by these terms. These terms are only used to distinguish one element from another.

For the purposes of this disclosure, the phrases "at least one of A or B", "at least one of A and B", and "A and/or B" means (A), (B), or (A and B). For the purposes of this disclosure, the phrase "A, B, and/or C" means (A), (B), (C), (A and B), (A and C), (B and C), or (A, B, and C).

As used herein, the term "or" refers to a non-exclusive "or" unless otherwise indicated (e.g., use of "or else" or "or in the alternative").

As used herein, unless stated explicitly, performing a respective feature, step, or functionality "in response to A" does not indicate that the respective feature, step, or functionality is performed immediately after "A" occurs as one or more intervening features, steps, or functionalities may be performed (at least in part) between an occurrence of the respective feature, step, or function and "A". Analogously, performing a respective feature, step, or functionality "based on A" does not indicate that the respective feature, step, or functionality is performed solely based on "A" as the respective feature, step, or functionality may be further based on one or more other features, steps, or functionalities in addition to "A".

Embodiments described herein may be implemented in a communication network, such as any of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" refers to a node in a communication network via which user equipment may access the network and/or which is configured to control radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device, such as a satellite network device, a low earth orbit (LEO) satellite and a geosynchronous earth orbit (GEO) satellite, or an aircraft network device.

Moreover, in connection of split radio access network (RAN), the network device may refer to a centralised unit (CU) of a base station and/or a distributed unit (DU) of a base station. An interface between CU and DU may be referred to as an F1 interface in NR. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise e.g. a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layers. Other functional splits are possible too. In practice, any processing task may be performed in either the CU or the DU and the boundary where the responsibility is shifted between the CU and the DU may depend on the applied implementation.

The term "terminal device" refers to any end device that may be configured to perform wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources may include, e.g., a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

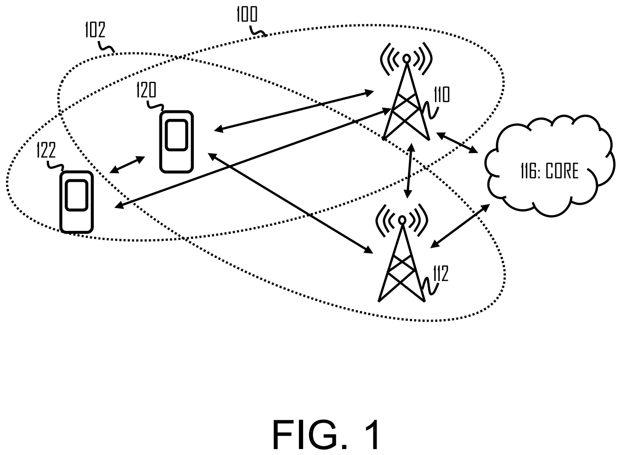

Fig. 1 illustrates an example of a communication network to which examples disclosed herein may be applied. The communication network or a cellular communication network may comprise a network node 110 configured to provide one or more cells, such as cell 100, and a network node 112 configured to provide one or more other cells, such as cell 102. Each cell may, for example, be a macro cell, a micro cell, femto, or a pico cell. The cell may define a coverage area or a service area of the corresponding access node.

The network node (110, 112) may be configured to provide a user equipment (UE) 120 (one or more UEs) with wireless access to the communication network. The wireless access may comprise downlink (DL) communication from the network node (110, 112) to the UE 120 and uplink (UL) communication from the UE 120 to the network node (110, 112). Examples of uplink channels may comprise physical uplink control channel (PUCCH) for transmitting control information and physical uplink shared channel (PUSCH) for transmitting data towards the network. Examples of downlink channels may comprise physical downlink control channel (PDCCH) for transmitting control information and physical downlink shared channel (PDSCH) for transmitting data towards the user equipment.

There may be a plurality of UEs (120, 122) in the system. Each of the plurality of UEs may be served by the same or by different network nodes (110, 112). UE may be configured with dual connectivity (DC), wherein the UE, for example UE 120, may be connected to multiple network nodes (110, 112). The UEs (120, 122) may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications, for example, refer to such an interface as an X2 interface. An interface between an LTE node and a 5G node, or between two 5G nodes may be called an Xn interface.

The network nodes 110 and 112 may be further connected via another interface to a core network 116 of the communication network. The LTE specifications specify the core network as an evolved packet core (EPC), and the core network may comprise a plurality of entities (e.g. a mobility management entity (MME) and a gateway node). The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5GC may, for example, comprise an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may, for example, support packet routing and forwarding, packet inspection and quality of service (QoS) handling.

From Rel-15 of 5G NR, three procedures for beam management have been specified. The three Procedures are controlled by the network: Procedure#1 (P1), Procedure#2 (P2) and Procedure#3 (P3), as described in 3GPP TS 38.214 Section 5.1.5 (TCI and QCL framework) and 5.1.6 (CSI-RS reception procedures). The three beam management procedures are supported within one or multiple TRPs of the serving cell.

P1 is used to enable UE measurement on different TRP Tx beams to support selection of TRP Tx beams/UE Rx beam(s), and it may include an intra/inter-TRP Tx beam sweep with e.g. SSB beams.

P2 is used to enable UE measurement on different TRP Tx beams to possibly change inter/intra-TRP Tx beam(s), e.g. for beam refinement by using narrower CSI beams compared to SSB beams in P1.

P3 is used to enable UE measurement on the same TRP Tx beam to change UE Rx beam in the case UE uses beamforming (e.g. mmW arrays on UEs for FR2 operation). P3 may use aperiodic CSI-RS.

Rel-15 to Rel-18 has specified periodic, semi-persistent and aperiodic CSI reporting, as shown in Table 1 below from TS 38.214.

**Table 1**

| **Table 5.2.1.4-1: Triggering/Activation of CSI Reporting for the possible CSI-RS Configurations.** | | | |
|---|---|---|---|
| **CSI-RS Configuration** | **Periodic CSI Reporting** | **Semi-Persistent CSI Reporting** | **Aperiodic CSI Reporting** |
| **Periodic CSI-RS** | **No dynamic triggering/activation** | **For reporting on PUCCH, the UE receives an activation command, as described in clause 6.1.3.16 of [10, TS 36321]; for reporting on PUSCH, the UE receives triggering on DCI** | **Triggered by DCI; additionally, subselection Indication as described in clause 6.1.3.13 of [10, TS 38.3211 possible as defined in Clause 5.2.1.5.1.** |
| **Semi-Persistent CSI-RS** | **Not Supported** | **For reporting on PUCCH, the UE receives an activation command, as described in clause 6.1.3.16 of [10. TS 38.321]; for reporting an PUSCH, the UE receives inggering on DCI** | **Triggered by DCI; additionally, subselection indication as described in clause 6.1.3.13 of (10. TS 38.321] possible as defined in Clause 5215.1.** |
| **Aperiodic CSI-RS** | **Not Supported** | **Not Supported** | **Triggered by DCI; additionally, subselection indication as described in clause 6.1.3.13 of [10, TS 38.321) possible as defined in Clause 5.2.1.5.1.** |

Rel-17 has introduced the "unified" TCI framework, meaning that TCI states providing QCL assumptions for the reception of DL signals and channels can be used to provide spatial sources for the transmission of UL signals and channels to determine the UL TX spatial filter.

There is a pool of TCI states configured via RRC and a subset of these configured TCI states is activated via MAC-CE with up to 8 TCI codepoints, each codepoint pointing to either separate or joint DL/UL TCI states.

The unified TCI framework also defines the concept of indicated TCI states, which can be joint DL/UL TCI states or separate DL and separate UL TCI states. That means that one or multiple (in case of multi-TRP for instance) of the configured TCI states is/are indicated TCI state(s) at a time.

Rel-17 introduced the unified TCI framework for sTRP, with one indicated joint DL/UL TCI state at a time OR one indicated separate DL and one indicate separate UL TCI state at a time for the UE.

Rel-18 then extended the unified TCI framework for mTRP, with two indicated joint TCI states at a time OR two indicated separate DL and two indicated separate UL TCI states at a time for the UE.

UE-initiated beam management (UEIBM) is where a UE is configured with at least one event/condition, and the UE may initiate beam reporting if the at least one event/condition occurs or is satisfied. In the scope of Rel-19, some use cases where UE could benefit from UEIBM reporting are being identified (e.g., to facilitate beam switch).

UEIBM may reduce overhead since beam reports are sent by the UE only when needed, avoiding unnecessary beam reports that may occur in the case of periodic reporting configured with small periodicities.

UEIBM may reduce latency since as soon as certain events/conditions are met, a beam report can be sent. This may avoid a delay which may occur in the case of periodic reporting configured with large periodicities.

Event-2, Event-1 and Event-7 have been proposed as triggers for a UEI beam report.

Event-2 is defined as where the quality of at least one new beam, such as L1-RSRP, becomes better than the current beam by a threshold value. For example, the network may configure the UE with a certain threshold value, for example 3 dB, and when the UE measures a new beam to have a L1-RSRP which is 3 dB better than the L1-RSRP of the current beam, then a UEI report is triggered. Besides Event-2, some other events have been also proposed, e.g., Event-1 and Event-7.

Event-1 is defined as where the quality of the current beam is worse than a certain threshold. Event-1 may avoid costly procedures such as BFR.

Event-7 is defined as where the quality of at least one new beam, such as L1-RSRP, becomes a threshold value better than the RS derived from the activated TCI state with the Q-th best quality, and may be used to update the active TCI state list.

The UL signal content of the UEI report, for example triggered by Event-2 with L1-RSRP as quality metric, may comprise a report of N beams, for example the top N beams, with N≥1 and configured by the network via RRC, and at least one of those N beams that satisfies Event-2. In addition to those N beams, the network may configure via RRC the UE to also report the current beam.

UEIBM report contents for Event-1 and Event-7 have not yet been finalised, but one assumption is that Event-2 format is going to be reused with small modifications. For example, for Event-1, the current beam may always be reported and for Event-7, instead of reporting the current beam, the UE reports the beam associated to the activated TCI state with the Q-th best quality.

N may be part of the event configuration, in the sense that the UE may be configured to report N=4 beams with Event-2, but just N=2 beams with Event-1.

Two procedures for sending the report from the UE to the network have been defined as Mode A and Mode B

In Mode A, a second UL channel for the UEI report is dynamically scheduled by the gNB. The UE sends in a first PUCCH channel an UL indication to request to the gNB resources in a second UL channel to carry the UEI report. The gNB indicates via DCI to the UE a resource in a second UL channel to carry the UEI report. The UE then sends the UEI report on the second UL channel.

In Mode B, the second UL channel for the UEI report is pre-configured by the gNB. The UE sends in a first PUCCH channel an UL indication to notify to the gNB that a UEI report will be transmitted in a second UL channel. The UE then sends the UEI report on the second UL channel.

Mode A may be the baseline and maybe supported by all UEs capable of UEIBM. Mode B may be optional and may be supported only by some UEs.

In both Mode A and Mode B, the first UL channel may be a periodic PUCCH. The UL indication in the first PUCCH may be single-bit or multi-bit.

For Mode A, the second UL channel is PUSCH.

For Mode B, the second UL channel is a Type-1 CG PUSCH and there is the same periodicity of the first UL channel (first PUCCH) and second UL channel. After the UE sends the UL indication in the first PUCCH, it is clearly defined on which second UL channel resource the UE will send the UEI report.

For Event-2, the UE monitors the RS for a current (or serving) beam and a certain number of new beams (note that "new" beams are sometimes referred to as well as "candidate beams" or "candidate new beams").

The RS for the current beam is related to the indicated TCI state, and there are two schemes under discussion. The first scheme is if the RS is the actual RS in the indicated TCI state. The second scheme is if the RS is the SSB which is QCLed with the actual RS in the indicated TCI state. One solution is that both schemes are supported, to make sure that current and new beams are of the same "type", e.g., either all SSBs or all CSI-RSs.

The RS(s) for the new beam(s) may be explicitly configured by the network via RRC.

The work of RAN1 up to now has focused on defining the aspects needed to implement a basic UEIBM feature, for example, assuming just one event configured, e.g., Event-2, and simplifying the first UL and second UL channels considerations.

The design for other events, i.e., Event-1 and Event-7, and the handling of multiple events should reuse the same design of Event-2 as much as possible.

In the following, a scenario where a UE is configured with multiple events for UEIBM and configuration of the resources in the second UL channel when multiple events are triggered at the UE is considered.

One proposal is that in case multiple events are triggered, the UE sends all beam reports multiplexed. In this solution, the beam reports may have redundant information, for example for Event-2 the UE is configured to report N beams, say the top-N beams, whereas for Event-1 the UE is configured to report N beams + the current beam. Treating the two reports independently may not be efficient and create redundancy. Depending on the configuration, it is possible that not all beam reports fit in terms of size, so a selection about what to report in case multiple events are triggered may be mandatory.

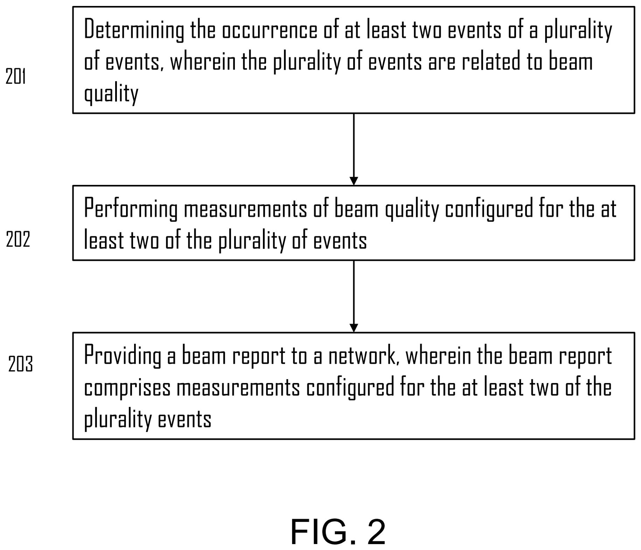

Fig. 2 shows a flowchart of a method according to an example embodiment. The method may be performed at an apparatus. The apparatus may comprise, be or be comprised in a UE.

At 201, the method comprises determining the occurrence of at least two events of a plurality of events, wherein the plurality of events are related to beam quality.

At 202, the method comprises performing measurements of beam quality configured for the at least two of the plurality of events.

At 203, the method comprises providing a beam report to a network, wherein the beam report comprises measurements configured for the at least two of the plurality events.

Optionally, the method may comprise providing a further beam report to the network, wherein the further beam report comprises beam measurements related to a one of the at least two events. The beam report and the further beam report may be transmitted in different occasions on an uplink channel. The uplink channel may be the second UL channel discusses previously and may be PUSCH (e.g., be a CG-PUSCH in Mode B or a PUSCH scheduled by the network in Mode A).

The beam report and the further beam report may both comprise a user equipment initiated beam report (UEIBM).

In an example embodiment, the UE reports a common beam report associated to the two triggered events, i.e., a beam report comprising measurements configured for at least two of a plurality of events, in the first PUSCH occasion on the UL channel (where the UL channel is the second UL channel discussed previously and may be a CG-PUSCH in Mode B or a PUSCH scheduled by the network in Mode A). The UE may optionally report a beam report (i.e. a further beam report) associated to one of the two triggered events in a second/subsequent PUSCH occasion on the UL channel. The further beam report may be provided if the common beam report is insufficient, e.g., does not include all the measurements configured for one of the at least two events.

The plurality of events may comprise at least one of the following: the quality of a beam other than a serving beam being higher than the quality of the serving beam by a threshold value (e.g., Event-2), the quality of the serving beam being lower than a threshold (e.g., Event-1) or the quality of a beam other than the serving beam being higher by a threshold value than a beam associated with an activated transmission configuration indicator state with a predefined quality. The predefined quality may be the Q-th best quality (e.g., Event-7).

Sending a common beam report may avoid duplicating information in reports associated to different but simultaneously triggered events, thus saving resources.

Parameters that may be used to define the common beam report format or design may include, the number of new beams (in case there is a different number of new beams to be reported per event), to include or not to include the current beam, and to include or not include the beam other than the serving beam with a pre-defined quality (e.g., a beam associated with an activated TCI state with the Q-th best quality). For example, the beam report may comprise measurements of the quality of N beams with a highest quality of the configured beam measurements. The beam report may further comprise at least one of a measurement of the quality of a serving beam or a beam other than the serving beam with a predefined quality.

The beam quality may comprise quality of a reference beam received from the network. The beam quality may comprise at least one of reference signal received power or signal to interference plus noise ratio of a reference signal of a respective beam.

Table 1 shows an example report design (also referred as beam report format) for Event-2, where the UE is configured to report N2 beams, and may also be configured to report the current beam.

**Table 1**

| |
|---|
| CRI or SSBRI #1 |
| CRI or SSBRI #2 |
| ... |
| CRI or SSBRI #N2 |
| L1-RSRP #1 |
| Differential L1-RSRP #2 |
| ... |
| Differential L1-RSRP #N2 |
| Differential L1-RSRP for current beam, if report of current beam is enabled by RRC |

An example beam report design is shown in Table 2, where the beam report design for Event-1 re-uses Event-2 design, with the difference that current beam is always reported, and where N1 beams may be reported instead of N2 beams, i.e., we have a per-event number of reported beams.

**Table 2**

| |
|---|
| CRI or SSBRI #1 |
| CRI or SSBRI #2 |
| ... |
| CRI or SSBRI #N1 |
| L1-RSRP #1 |
| Differential L1-RSRP #2 |
| ... |
| Differential L1-RSRP #N1 |
| Differential L1-RSRP for current beam |

An example beam report is shown in Table 3, where the beam report design for Event-7 re-uses Event-2 design, with the difference that the beam associated to the activated TCI state with the Q-th best quality is always reported instead of the current beam together with its index, and where N7 beams may be reported instead of N2 beams, which looks as shown in Table 3.

**Table 3**

| |
|---|
| CRI or SSBRI #1 |
| CRI or SSBRI #2 |
| ... |
| CRI or SSBRI #N7 |
| CRI or SSBRI 'active TCI with Q-th best quality' |
| L1-RSRP #1 |
| Differential L1-RSRP #2 |
| ... |
| Differential L1-RSRP #N7 |
| Differential L1-RSRP for beam associated to the activated TCI state with the Q-th best quality |

Assuming that Event-1 and Event-2 (without the current beam being reported) are configured, and assuming for example N1=2 and N2=4, in one example, the common beam report may include max(N1, N2) beams and the current beam. The advantage of this alternative is that just a single beam report is sent instead of two. In this example, with a format as shown in Table 4, the common beam report has N2=4 beams and the current beam, which is different from both Event-1 and Event-2 formats, i.e., it includes aspects of both.

**Table 4**

| |
|---|
| CRI or SSBRI #1 |
| CRI or SSBRI #2 |
| ... |
| CRI or SSBRI #N2 |
| L1-RSRP #1 |
| Differential L1-RSRP #2 |
| ... |
| Differential L1-RSRP #N2 |
| Differential L1-RSRP for current beam |

In an example, the common beam report includes min(N1, N2) beams without the current beam. The advantage of this alternative is that the smallest beam report possible is first sent, with always the potential for a subsequent beam report with the remaining max(N1, N2) - min(N1, N2) beams that were not in the first beam report and the current beam. In this example, shown in Table 5, the common beam report has N1=2 beams, with a format as the one here below, which is different from both Event-1 and Event-2 formats (note that Event-1 format requires also the current beam).

**Table 5**

| |
|---|
| CRI or SSBRI #1 |
| CRI or SSBRI #2 |
| ... |
| CRI or SSBRI #N1 |
| L1-RSRP #1 |
| Differential L1-RSRP #2 |
| ... |
| Differential L1-RSRP #N1 |

In an example where Event-7 and Event-2 (with the current beam being reported) are configured, and assuming for example N7=4 and N2=2, the common beam report may include max(N7, N2) beams and the current beam. The advantage of this alternative is to report all new beams to be reported plus the current beam, implicitly assuming that Event-2 is more critical than Event-7. In this example, the common beam report has then N7=4 beams and the current beam, with a format as shown in Table 6, which is different from both Event-7 and Event-2 formats.

**Table 6**

| |
|---|
| CRI or SSBRI #1 |
| CRI or SSBRI #2 |
| ... |
| CRI or SSBRI #N7 |
| L1-RSRP #1 |
| Differential L1-RSRP #2 |
| ... |
| Differential L1-RSRP #N7 |
| Differential L1-RSRP for current beam, if report of current beam is enabled by RRC |

In an example, where Event-7 and Event-2 (with the current beam being reported) are configured, the common beam report may include max(N7, N2) beams and the current beam and the beam associated to the activated TCI state with the Q-th best quality. The advantage of this alternative is that just a single beam report is sent instead of two. In this example, shown in Table 7, the common beam report has then N7=4 beams and the current beam and the beam associated to the activated TCI state with the Q-th best quality, with a format as the one here below, which is different from both Event-7 and Event-2 formats.

**Table 7**

| |
|---|
| CRI or SSBRI #1 |
| CRI or SSBRI #2 |
| ... |
| CRI or SSBRI #N7 |
| CRI or SSBRI 'active TCI with Q-th best quality' |
| L1-RSRP #1 |
| Differential L1-RSRP #2 |
| ... |
| Differential L1-RSRP #N7 |
| Differential L1-RSRP for beam associated to the activated TCI state with the Q-th best quality |
| Differential L1-RSRP for current beam, if report of current beam is enabled by RRC |

A method as described with reference to Fig. 2 may comprise providing an indication to the network of the occurrence of the at least two of the plurality of events. The indication may be provided using a periodic control channel associated with the each of the at least two events respectively. The indication may be provided on a first UL channel as described above, e.g., a periodic PUCCH. The UL indication may be single-bit or multi-bit.

A method as described with reference to Fig. 2 may comprise receiving a configuration of a format of the beam report from the network. For example, the common beam report format may be configured by the network via RRC and/or MAC-CE.

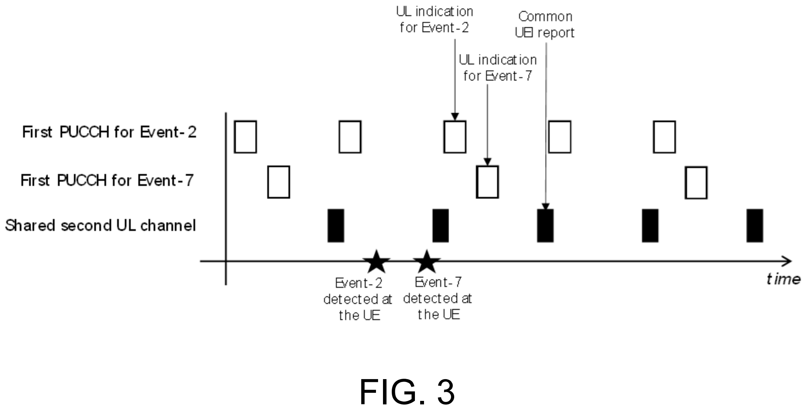

Fig. 3 shows an example embodiment where two events are triggered. The UE indicates the occurrence of each of the two events using a periodic control channel associated with the each of the at least two events, respectively and the UE reports just in CG-PUSCH occasion a common beam report associated to both events.

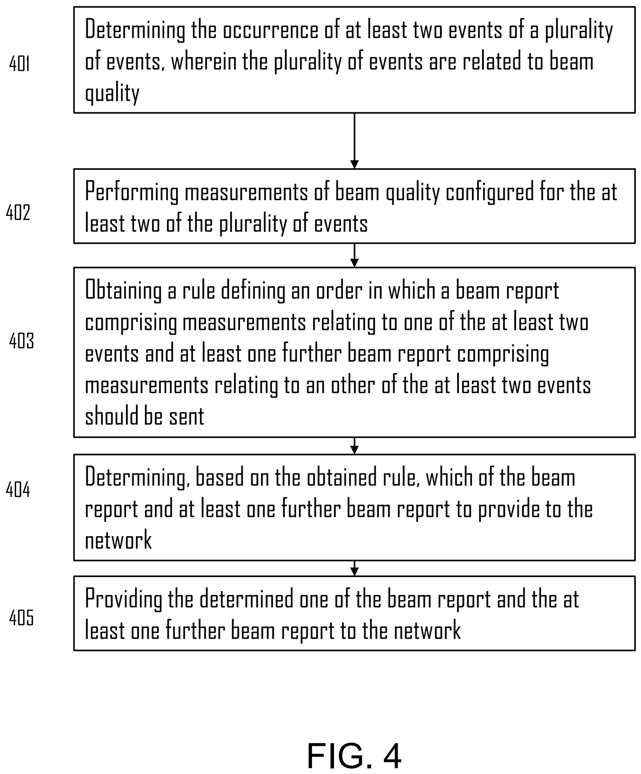

Fig. 4 shows a flowchart of a method according to an example embodiment. The method may be performed at an apparatus. The apparatus may comprise a UE.

At 401, the method comprises determining the occurrence of at least two events of a plurality of events, wherein the plurality of events are related to beam quality.

At 402, the method comprises performing measurements of beam quality configured for the at least two of the plurality of events.

At 403, the method comprises obtaining a rule defining an order in which a beam report comprising measurements relating to one of the at least two events and at least one further beam report comprising measurements relating to an other of the at least two events should be sent.

At 404, the method comprises determining, based on the obtained rule, which of the beam report and at least one further beam report to provide to the network.

At 405, the method comprises providing the determined one of the beam report and the at least one further beam report to the network.

A method as described with reference to Fig. 4 may further comprise providing an other of the beam report and the at least one further beam report to the network, wherein the determined one of the beam report and the at least one further beam report and the other of the beam report and the at least one further beam report are transmitted in different occasions on a uplink channel. The order in which the beam report and the further beam report are sent to the network is determined by the UE based on the rule.

The beam report and the at least one further beam report may comprise a user equipment initiated beam report.

The determined one of the beam report and the at least one further beam report to the network may be provided on an UL channel, e.g., the second UL channel as discussed previously. For example, for a UE configured with multiple events for UEIBM, an UL channel (e.g., the second UL channel) may be shared by all configured events. The UL channel may be e.g., a CG-PUSCH in Mode B or a PUSCH scheduled by the network in Mode A shared among all configured events.

A method as described with reference to Fig. 4 may comprise providing an indication to the network of the occurrence of the at least two of the plurality of events. The indication may be provided using a periodic control channel associated with the each of the at least two events, respectively (e.g., using a first UL channel as described previously). For example, multiple events are triggered simultaneously, and may be indicated by the UE to the network with any of the currently discussed first PUCCH design.

In an example embodiment of the proposed solution, if two events are triggered at the UE, the UE indicates both events to the network, reports a beam report associated to a first one of the triggered event in the first PUSCH occasion (i.e., an occasion on an UL channel), and then reports a beam report associated to the second triggered event in a second/subsequent PUSCH occasion (i.e. a different occasion on the UL channel). For example, assuming that both Event-2 and Event-7 have been triggered, the UE may, after indicating that both events have been triggered, transmit in a first PUSCH occasion the beam report associated to Event-2 and transmit in a second/subsequent PUSCH occasion the beam report associated to the other event, i.e., Event-7 in this example.

The plurality of events may comprise at least one of the following: the quality of a beam other than a serving beam being higher than the quality of the serving beam by a threshold value (e.g., Event-2), the quality of the serving beam being lower than a threshold (e.g., Event-1) or the quality of a beam other than the serving beam being higher by a threshold value than a beam associated with an activated transmission configuration indicator state with a predefined quality. The predefined quality may be the Q-th best quality (e.g., Event-7).

The beam quality may comprise quality of a reference beam received from the network. The beam quality may comprise at least one of reference signal received power or signal to interference plus noise ratio of a reference signal of a respective beam.

The rule defining an order in which a beam report comprising measurements relating to one of the at least two events and at least one further beam report comprising measurements relating to an other of the at least two events should be sent may be defined as a rule for deciding which beam report, i.e., the beam report associated to which event, to transmit in the first and second/subsequent PUSCH occasion.

The rule may be based on at least one of the following: an order in which the at least two events occur, an identifier of the event or a preconfigured rule. The preconfigured rule may be received from the network (e.g., configured via RRC and/or MAC-CE) or may be a pre-defined rule in the specification.

For example, an order in which the events may occur may be the timing at which the event has been triggered. In an example, the beam report associated to the triggered event that has been triggered first is transmitted first. In an example, the beam report associated to the triggered event that has been triggered last is transmitted first. The UE may indicate to the network which event has been triggered first.

Where the rule is based on the identifier of the event, as an example, the UE may report first Event-2, then Event-1 and then Event-7 (of course other orders are not precluded).

The order in which the beam report and the at least one further beam report is sent may be based on an order in which the at least two events are indicated to the network, for example on the timing at which the event is indicated by the UE in the first PUCCH, for example when we have a first PUCCH per event. In one example, the beam report associated to the first indicated event by the UE to the network may be transmitted first. In another example, the beam report associated to the latest indicated event by the UE to the network is transmitted first.

The embodiments above have been detailed for the case when two events are triggered, but can be extended in a straightforward way also to the case where more than two events are simultaneously triggered.

For example, if Event-2, Event-1 and Event-7 are triggered, the UE may, after indicating that all three events have been triggered, transmit in the first PUSCH occasion the beam report associated to Event-2, transmit in the second PUSCH occasion the beam report associated to Event-1, and transmit in a third PUSCH occasion the beam report associated to Event-7.

Using one UL channel shared among the events allows optimizing reporting resources with respect to a solution with a per-event second UL channel. Optimizing resource utilization, i.e. many resources reserved to second channel, for example to fit many beam reports, may be a waste of resources if unused when only one event is triggered at the time, therefore sharing second channel resources among multiple events increases reporting resource utilization.

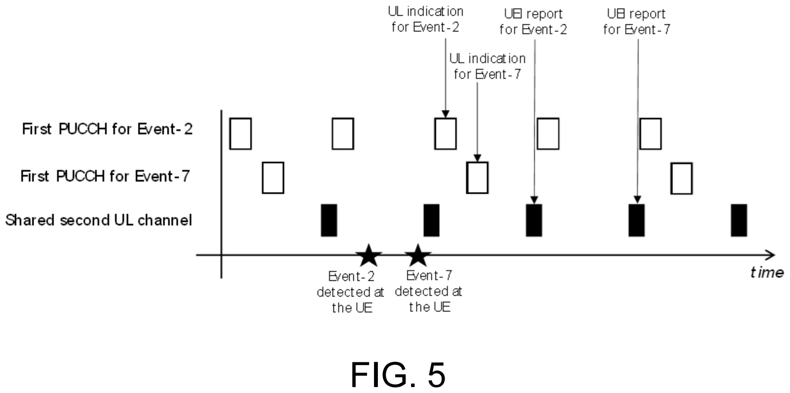

Fig. 5 shows an example where two events, Event-2 and Event-7, are triggered. The UE indicates the occurrence of each of the two events using a periodic control channel associated with each of the at least two events, respectively and the UE reports in a first UL channel occasion the beam report associated to the event that has been indicated first to the network, Event-2 in this example.

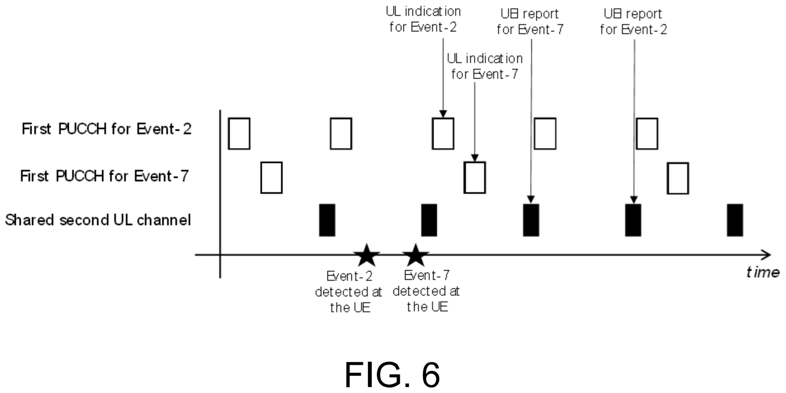

Fig. 6 shows an example where two events, Event-2 and Event-7, are triggered. The UE indicates the occurrence of each of the two events using a periodic control channel associated with each of the at least two events, respectively and the UE reports in a first UL channel occasion the beam report associated to the event that has been indicated first to the network, Event-7 in this example.

The order in which a beam report comprising measurements related to one event of the at least two events and at least one further beam report related to an other event of the at least two events are sent to the network may be up to UE implementation. The UE may then indicate to the network the order, for example when sending the first beam report.

For example, if the UE is configured with multiple events and more than one event are triggered simultaneously, it may be up to the UE to decide which beam report to send in the first PUSCH occasion and which beam report to send in the second/subsequent PUSCH occasion.

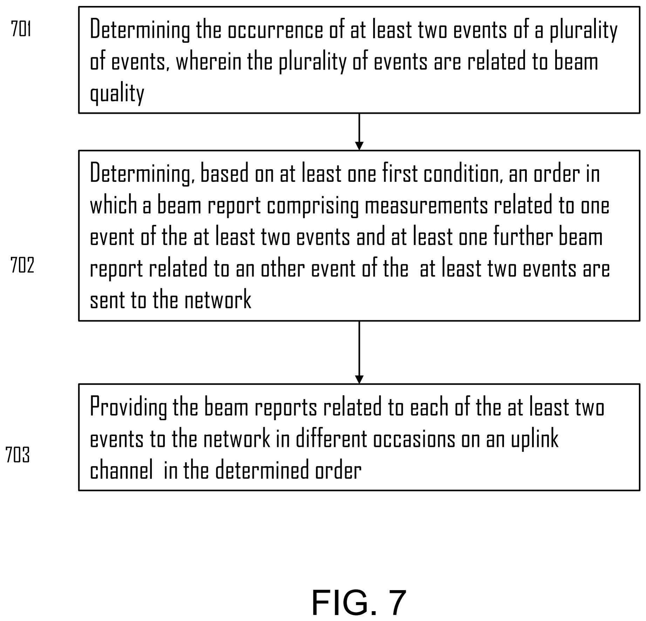

Fig. 7 shows a flowchart of a method according to an example embodiment.

At 701, the method comprises determining the occurrence of at least two events of a plurality of events, wherein the plurality of events are related to beam quality.

At 702, the method comprises determining, based on at least one first condition, an order in which a beam report comprising measurements related to one event of the at least two events and at least one further beam report related to an other event of the at least two events are sent to the network.

At 703, the method comprises providing the beam reports related to each of the at least two events to the network in different occasions on an uplink channel in the determined order.

The plurality of events may comprise at least one of the following: the quality of a beam other than a serving beam being higher than the quality of the serving beam by a threshold value (e.g., Event-2), the quality of the serving beam being lower than a threshold (e.g., Event-1) or the quality of a beam other than the serving beam being higher by a threshold value than a beam associated with an activated transmission configuration indicator state with a predefined quality. The predefined quality may be the Q-th best quality (e.g., Event-7).

The beam report and the at least one further beam report may comprise a user equipment initiated beam report.

The beam quality may comprise quality of a reference beam received from the network. The beam quality may comprise at least one of reference signal received power or signal to interference plus noise ratio of a reference signal of a respective beam.

The at least one first condition may comprise beam quality. The at least one first condition may comprise a quality of a serving beam or a difference between a quality of a serving beam and a quality of a best new beam. The quality comprises at least one of reference signal received power or signal to interference plus noise ratio of a reference signal of a respective beam.

In an example, a UE configured with Event-2 (that is used for beam switching) and Event-7 (that is used to update the active TCI state list) may decide, under certain RSRP conditions, to transmit first the UEI report associated to Event-2, but under other RSRP conditions to transmit the UEI report associated to Event-7.

In an example embodiment, if UE is configured with one of the following:
- Event-1 and Event-7 or
- Event-2 and Event-7 or
- Event-1 and Event-2 and Event-7
a condition based on the RSRP of the current beam may be used to determine whether to transmit first the UEI report associated to Event-7 or to transmit first the UEI report associated to any of the other events (i.e., to determine, based on at least one first condition, an order in which a beam report comprising measurements related to one event of the at least two events and at least one further beam report related to an other event of the at least two events are sent to the network).

A flowchart of an example solution is shown in **Error! Reference source not found.8.**

In an example embodiment, at Step 0 the UE is configured with UEIBM. Event-2 configuration includes the set of new beams to be monitored and a threshold X₂ dB between a new beam and the current beam to trigger the event. Event-7 configuration includes the set of new beams to be monitored, parameter Q and a threshold X₇ dB between a new beam and the beam associated to the activated TCI state with the Q-th best quality. Multi-bit first PUCCH is used to indicate which events have been triggered. At step 1, the UE monitors the beams for event triggering. At step 2, Event-2 and Event-7 are triggered. At Step 3, the UE sends a multi-bit first PUCCH to inform the network that both events have been triggered. At Step 4, the UE then checks if the RSRP of the current beam is above Y dBm (where Y is UE implementation). This is an example of determining, based on a first condition. If the RSRP of the current beam is above Y, then the RSRP conditions of the current beam are not too critical, and the UE transmits first the UEI report associated to Event-7 to update the active TCI state list (at Step 5). If on the other hand the RSRP of the current beam is below Y, then the RSRP conditions of the current beam are assessed to be critical, and the UE transmits first the UEI report associated to Event-2 to speed up a potential beam switching (at Step 6).

In an example embodiment, where the UE is configured with one of the following:
- Event-1 and Event-7 or
- Event-2 and Event-7 or
- Event-1 and Event-2 and Event-7
a condition based on the RSRP difference between the best new beam and the current beam may be used to decide whether to transmit first the UEI report associated to Event-7 or to transmit first the UEI report associated to any of the other events. The steps of this solution are as follows (for example for the case of Event-2 and Event-7):

The UE is configured with UEIBM. Event-2 configuration includes the set of new beams to be monitored and a threshold X₂ dB between a new beam and the current beam to trigger the event. Event-7 configuration includes the set of new beams to be monitored, parameter Q and a threshold X₇ dB between a new beam and the beam associated to the activated TCI state with the Q-th best quality. Multi-bit first PUCCH is used to indicate which events have been triggered. The UE monitors the beams for event triggering. Event-2 and Event-7 are triggered. The UE sends a multi-bit first PUCCH to inform the network that both events have been triggered. UE checks if the RSRP difference between the best new beam and the current beam is above Z dB (where Z is UE implementation). If such RSRP difference is above Z, then the RSRP conditions of the current beam is assessed to be critical, and the UE transmits first the UEI report associated to Event-2 to speed up a potential beam switching If such RSRP difference is below Z, then the RSRP conditions of the current beam is not too critical, and the UE transmits first the UEI report associated to Event-7 to update the active TCI state list.

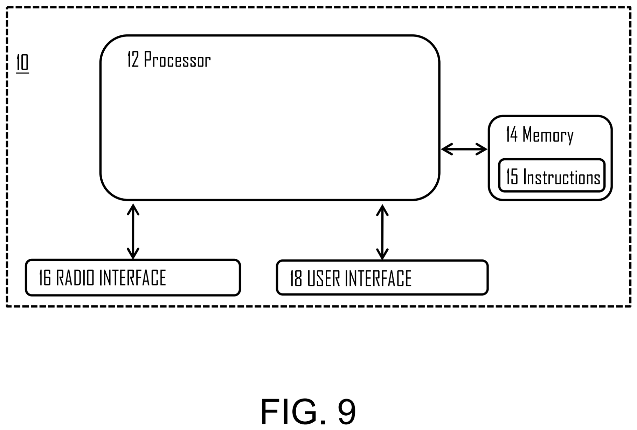

Fig. 9 shows, by way of example, a block diagram of an apparatus 10. The apparatus 10 comprises, for example, at least one processor 12 and at least one memory 14 storing instructions 15 that, when executed by the at least one processor, cause the apparatus 10 at least to perform the method or methods (or portion(s) thereof) as disclosed herein, and any of the embodiments (or respective portion(s) thereof). In an example, the at least one memory and the instructions (e.g. a computer program code, software), are configured, with the at least one processor, to cause the apparatus 10 to perform the method or methods (or portion(s) thereof) as disclosed herein, and any of the embodiments (or respective portion(s) thereof).

A processor 12 may comprise circuitry, or be constituted as circuitry or circuitries, the circuitry or circuitries being configured to perform phases of methods in accordance with embodiments described herein.

As used herein, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 14 may be implemented using any suitable data storage technology. The memory may comprise a database for storing data. The memory 14 may, for example, be at least in part external to apparatus 10 but accessible to apparatus 10.

The instructions 15 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 10 is a terminal device, such as a UE. As another example, the apparatus is comprised in such a terminal device, e.g. as a chipset configured to control the terminal device. The apparatus 10 may be caused or configured or comprise means to perform at least the method of Figs. 2, 4 and 7 and/or any one or more of the embodiments described herein.

The apparatus 10 comprises a radio interface 16. The radio interface 16 may provide the apparatus 10 with communication capabilities. The radio interface 16 may comprise a receiver configured to receive information in accordance with at least one cellular or non-cellular standard. The radio interface 16 may comprise a transmitter configured to transmit information in accordance with at least one cellular or non-cellular standard. The receiver may comprise more than one receiver. The transmitter may comprise more than one transmitter. The radio interface 16 may comprise a transceiver configured to receive and transmit information in accordance with at least one cellular or non-cellular standard. The transceiver may comprise more than one transceiver.

The apparatus 10 may comprise a user interface 18 comprising, for example, at least one of a keypad, a microphone, a touch display, a display, a speaker, etc. The user interface 18 may be used to control the apparatus by the user. The user interface 18 may be external to the apparatus 10. For example, the apparatus 10 may be connected to another device, such as a computer, either via wireless or wired connection, and the apparatus 10 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 10. For example, the at least one processor 12, the memory 14, and the computer program code form means for carrying out the method or methods (or portion(s) thereof) as disclosed herein, and any of the embodiments (or respective portion(s) thereof). As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Even though this disclosure has been described above with reference to non-limiting and illustrative examples according to the accompanying figures, it is clear that the scope of this disclosure is not restricted thereto - but can be modified in many different ways. As technology advances, it will become apparent to a person skilled in art as to how the disclosure can be further implemented and/or modified in various ways. Further, it is clear to a person skilled in the art that the embodiments described herein may, but are not required to, be combined in various ways with other embodiments described herein. The abbreviations below may be used in the application and may be defined as follows:
- BAT: Beam Application Time
- BFR: Beam Failure Recovery
- BM: Beam Management
- CBD: Candidate Beam Detection
- CG: Configured Grant
- CRI: CSI-RS Resource Indicator
- CSI: Channel State Information
- DCI: Downlink Control Information
- DL: Downlink
- DRX: Discontinuous Reception
- IE: Information Element
- FR: Frequency Range
- GBBR: Group Based Beam Reporting
- L1: Layer 1
- MAC-CE: Medium Access Control - Control Element
- MIMO: Multiple Input Multiple Output
- mTRP: Multiple TRP
- NR: New Radio
- NZP: Non-Zero-Power
- sTRP: Single TRP
- PDCCH: Physical DL Control Channel
- PDSCH: Physical DL Shared Channel
- PUCCH: Physical UL Control Channel
- PUSCH: Physical UL Shared Channel
- QCL: Quasi Co Location
- RLM: Radio Link Monitoring
- RRC: Radio Resource Control
- RS: Reference Signal
- RSRP: RS received power
- SINR: Signal to interference plus noise ratio
- SR: Scheduling Request
- SRS: Sounding Reference Signal
- SSB: Synchronization Signal/PBCH Block
- SSBRI: SSB Resource Indicator
- TCI: Transmission Configuration Indicator
- TRP: Transmission Reception Point
- UCI: Uplink Control Information
- UE: User Equipment
- UEI: UE-Initiated
- UEIBM: UE-Initiated Beam Management
- UL: Uplink

## Claims

1. An apparatus comprising means for:
determining the occurrence of at least two events of a plurality of events, wherein the plurality of events are related to beam quality;
determining, based on at least one first condition, an order in which a beam report comprising measurements related to one event of the at least two events and at least one further beam report related to an other event of the at least two events are sent to the network; and
providing the beam reports related to each of the at least two events to the network in different occasions on an uplink channel in the determined order..

2. The apparatus according to claim 1, wherein the at least one condition comprises beam quality.

3. The apparatus according to claim 1 or claim 2, wherein the at least one first condition comprises a quality of a serving beam.

4. The apparatus according to claim 1 or claim 2, wherein the at least one first condition comprises a difference between a quality of a serving beam and a quality of a best new beam.

5. The apparatus according to any of claims 1 to 4, wherein the quality comprises at least one of reference signal received power or signal to interference plus noise ratio of a reference signal of a respective beam.

6. The apparatus according to any of claims 1 to 5, wherein the plurality of events comprises at least one of the following: the quality of beam other than a serving beam being higher than the quality of the serving beam by a threshold value, the quality of the serving beam being lower than a threshold or the quality of a beam other than the serving beam being higher by a threshold value than a beam associated with an activated transmission configuration indicator state with a predefined quality.

7. The apparatus according to any of claims 1 to 6, wherein the apparatus comprises a user equipment and the beam report and the at least one further report comprise a user equipment initiated beam report.

8. A method comprising:
determining the occurrence of at least two events of a plurality of events,
wherein the plurality of events are related to beam quality;
determining, based on at least one first condition, an order in which a beam report comprising measurements related to one event of the at least two events and at least one further beam report related to an other event of the at least two events are sent to the network; and
providing the beam reports related to each of the at least two events to the network in different occasions on an uplink channel in the determined order.

9. A computer program comprising instructions which, when executed by an apparatus, cause the apparatus to perform at least:
determining the occurrence of at least two events of a plurality of events, wherein the plurality of events are related to beam quality;
determining, based on at least one first condition, an order in which a beam report comprising measurements related to one event of the at least two events and at least one further beam report related to an other event of the at least two events are sent to the network; and
providing the beam reports related to each of the at least two events to the network in different occasions on an uplink channel in the determined order.
